# EUROPÄISCHE PATENTANMELDUNG

(11) **EP 1 520 876 A1**
(43) Veröffentlichungstag der Anmeldung: **06.04.2005**
(21) Anmeldenummer: 04022034.5
(22) Anmeldetag: 16.09.2004
(51) Int. Cl.: C08K 9/08, C09C 3/10

(54) **Pigmentpräparation für Kunststoffe**

(30) Priorität: 01.10.2003 DE 10345647
(71) Anmelder: MERCK PATENT GmbH, 64293 Darmstadt (DE)
(72) Erfinder: Kieser, Manfred, Dr., 64291 Darmstadt (DE); Aust, Emil F., Dr., 55130 Mainz (DE); Brehm, Hans-Jürgen, 64678 Lindenfels (DE)

(57) **Zusammenfassung**

Die vorliegende Erfindung betrifft Pigmentpräparationen für Kunststoffe umfassend ein oder mehrere plättchenförmige Effektpigmente, ein Trägermaterial und ein oder mehrere Fluor-haltige Polymere, Verfahren zur Herstellung der Pigmentpräparationen sowie deren Verwendung zur Pigmentierung von Kunststoffen sowie zur Herstellung von Masterbatches.

## Beschreibung

Die vorliegende Erfindung betrifft Pigmentpräparationen für Kunststoffe umfassend ein oder mehrere plättchenförmige Effektpigmente, ein Trägermaterial und ein oder mehrere Fluor-haltige Polymere, Verfahren zur Herstellung der Pigmentpräparationen sowie deren Verwendung zur Pigmentierung von Kunststoffen sowie zur Herstellung von Masterbatches.

Für die Verarbeitung von Kunststoffen gibt es eine Vielzahl von Verfahren. Eine besondere Klasse von derartigen Verfahren sind die Extrusionsverfahren zur Herstellung von z.B. Rohren, Profilen, Schläuchen oder Drähten aus thermoplastischen Kunststoffen. Bei der Durchführung der Extrusionsprozesse treten eine Reihe von Schwierigkeiten auf. So können unerwünschte Schlieren, Rillen oder Blasen auftreten, die die Transparenz aber auch die mechanischen Eigenschaften der Extrudate verschlechtern.

Zur Vermeidung dieser Verarbeitungsfehler sind eine Reihe von Verfahrensmodifikationen bzw. Änderungen der Kunststoffzusammensetzungen vorgeschlagen worden. So beschreibt die US 5,089,200 einen Schmelzextrusionsprozeß, bei dem die eingesetzten Extrusionsdüsen mit einem oder mehreren Metalloxiden beschichtet sind und Fluor-haltige Polymere auf der Metalloxidoberfläche gebunden sind. Diese Vorgehensweise hat den Nachteil, dass die Fluor-haltigen Polymere durch Abnutzung abgelöst werden können und somit die Verarbeitungsfehler nicht dauerhaft beseitigt werden können.

Aus der US 4,904,735 ist der Zusatz Fluor-haltiger Polymere in Kunststoffen zur Verbesserung der Extrusionseigenschaften bekannt. Der Kunststoffverarbeiter muss den optimalen Anteil des Fluor-haltigen Polymeren bestimmen und dann individuell jeden zu verarbeitenden Kunststoff mit dem Fluor-haltigen Polymeren versehen. Dies ist für den Kunststoffverarbeiter zu aufwendig und sehr kostenintensiv, da zusätzliche Mischer nötig sind.

Bei Einsatz plättchenförmiger Effektpigmente in Kunststoffverarbeitungsverfahren, insbesondere bei der Extrusion, treten zusätzliche Schwierigkeiten auf. So ist das schlechte Fließverhalten plättchenförmiger Pigmente, wie z.B. Glimmer lange bekannt. Bei einer Vielzahl von Anwendungen, insbesondere im Druck- und Farbenbereich, führt dies nicht zu größeren Problemen. Bei der Einarbeitung in Kunststoffen jedoch erweist sich das schlechte Fließverhalten dieser Pigmente als problematisch. Als besonders störend erweist sich bei der Verarbeitung die Bildung sogenannter Stippen in den erhaltenen Körpern, die sich nachteilig auf das Aussehen und die mechanischen Eigenschaften der Kunststoffkörper auswirken. So brechen die Formkörper bei geringer mechanischer Beanspruchung leicht an den Stippen und sind für die spätere Verwendung damit unbrauchbar. Die genaue Ursache der Stippenbildung ist nicht bekannt. Es wurden in der Vergangenheit verschiedene Bildungsmechanismen diskutiert, ohne dass sich ein allgemein anerkannter Mechanismus herausstellte. Sicher ist nur, dass sich die Stippen während des Extrusionsprozesses bilden und weder im verwendeten Effektpigment-haltigen Kompound noch im Effektpigment-haltigen Masterbatch vorhanden waren. Darüber hinaus sind die Stippen stark pigmenthaltig und treten vornehmlich bei Verwendung von Formwerkzeugen mit nicht optimaler Oberflächenbeschaffenheit auf. Weiterhin ist der Grad der Stippenbildung auch von der einzelnen Gesamtanlage abhängig. Da auftretende Stippen nachträglich nicht beseitigt werden können, ist dies für den Verarbeiter aber auch für den Masterbatch-, Kompound- bzw. Effektpigmenthersteller ein sehr ernstes und kostenintensives Problem. Darüber hinaus kommt es bei der Verarbeitung von Perlglanzpigmenten z.B. bei der Herstellung von Masterbatches zu einer ausgeprägten Staubentwicklung, was einen erhöhten apparativen Aufwand zur Beseitigung der Stäube und zur Reinigung der Maschinen erfordert.

Es bestand daher die Aufgabe, plättchenförmige Effektpigmente enthaltende Pigmentpräparationen bereitzustellen, die einfach herstellbar, nicht staubend und gut rieselfähig sind und darüber hinaus bei der Weiterverarbeitung, insbesondere in Extrusionsverfahren, die Bildung von Stippen verringern bzw. ganz verhindern.

Überraschenderweise konnte diese Aufgabe durch Pigmentpräparationen gemäß der vorliegenden Erfindung gelöst werden.

Gegenstand der Erfindung ist daher eine Pigmentpräparation zur Pigmentierung von Kunststoffen umfassend ein oder mehrere plättchenförmige Effektpigmente, ein Trägermaterial und ein oder mehrere Fluor-haltige Polymere. Weiterhin ist Gegenstand der vorliegenden Erfindung ein Verfahren zur Herstellung der erfindungsgemäßen Pigmentpräparation, wobei ein oder mehrere plättchenförmige Effektpigmente mit einem Trägermaterial und ein oder mehreren Fluor-haltigen Polymeren gemischt werden. Die Verwendung der erfindungsgemäßen Pigmentpräparation zur Pigmentierung von Kunststoffen und zur Herstellung von Masterbatches ist ebenfalls Gegenstand dieser Erfindung.

Die erfindungsgemäße Pigmentpräparation erweist sich als besonders vorteilhaft für die Einarbeitung in Kunststoffe, insbesondere in diejenige, die mit Extrusionsverfahren verarbeitet werden. Auf diese Weise gewonnene Effektpigment-haltige Formkörper zeigen keine oder nur eine geringe Anzahl von Stippen, was mit Pigmentpräparationen aus dem Stand der Technik nicht immer möglich ist. Damit kann der Ausschussanteil bei der Produktion deutlich verringert werden, was die Kosten der Hersteller deutlich senkt. Darüber hinaus sind die erfindungsgemäßen Pigmentpräparationen nicht staubend und sehr gut rieselfähig, was den apparativen Aufwand bei ihrer Verarbeitung verringert. Der Kunststoffverarbeiter kann die Pigmentpräparation direkt zu Masterbatches oder Kompounds verarbeiten oder in Form von Masterbatches direkt einsetzen und muss keine zeit- und kostenintensive Optimierung der Extrusionsmischung vornehmen. Weiterhin kann die stippenfreie Verarbeitung maschinen-unabhängig erfolgen, dass heißt der Anwender ist nicht auf eine bestimmte Extruderanlage festgelegt, sondern kann auf unterschiedlichen Anlagen vergleichbare Ergebnisse erzielen.

Bei den plättchenförmigen Effektpigmenten kann es sich in der vorliegenden Erfindung um Perlglanzpigmente, Metalleffektpigmente, Mehrschichtpigmente mit transparenten, semitransparenten und/oder opaken Schichten, holographische Pigmente, BiOCl- und/oder LCP-Pigmente handeln.

Gemäß der vorliegenden Erfindung einsetzbare Perlglanzpigmente, Metalleffektpigmente oder Mehrschichtpigmente mit transparenten, semitransparenten und/oder opaken Schichten basieren insbesondere auf Trägern, wobei dieser vorzugsweise plättchenförmig ist. Beispielsweise eignen sich plättchenförmiges TiO₂, synthetischer oder natürlicher Glimmer, Glasplättchen, Metallplättchen, plättchenförmiges SiO₂, Al₂O₃ oder plättchenförmiges Eisenoxid. Die Metallplättchen können unter anderem aus Aluminium, Titan, Bronze, Stahl oder Silber bestehen, vorzugsweise Aluminium und/oder Titan. Die Metallplättchen können dabei durch entsprechende Behandlung passiviert sein. In einer bevorzugten Ausführungsform kann der Träger mit einer oder mehreren transparenten semitransparenten und/oder opaken Schichten enthaltend Metalloxide, Metalloxidhydrate, Metallsuboxide, Metalle, Metallfluoride, Metallnitride, Metalloxynitride oder Mischungen dieser Materialien beschichtet sein. Die Metalloxid-, Metalloxidhydrat-, Metallsuboxid-, Metall-, Metallfluorid-, Metallnitrid-, Metalloxynitridschichten oder die Mischungen hieraus können niedrig- (Brechzahl < 1.8) oder hochbrechend (Brechzahl ≥ 1.8) sein. Als Metalloxide und Metalloxidhydrate eignen sich alle dem Fachmann bekannten Metalloxide oder Metalloxidhydrate, wie z. B. Aluminiumoxid, Aluminiumoxidhydrat, Siliziumoxid, Siliziumoxidhydrat, Eisenoxid, Zinnoxid, Ceroxid, Zinkoxid, Zirkoniumoxid, Chromoxid, Titanoxid, insbesondere Titandioxid, Titanoxidhydrat sowie Mischungen hieraus, wie z.B. Ilmenit oder Pseudobrookit. Als Metallsuboxide können beispielsweise die Titansuboxide eingesetzt werden. Als Metalle eignen sich z.B. Chrom, Aluminium, Nickel, Silber, Gold, Titan, Kupfer oder Legierungen, als Metallfluorid eignet sich beispielsweise Magnesiumfluorid. Als Metallnitride oder Metalloxynitride können beispielsweise die Nitride oder Oxynitride der Metalle Titan, Zirkonium und/oder Tantal eingesetzt werden. Bevorzugt werden Metalloxid-, Metall-, Metallfluorid und/oder Metalloxidhydratschichten und ganz besonders bevorzugt Metalloxid- und/oder Metalloxidhydratschichten auf den Träger aufgebracht. Weiterhin können auch Mehrschichtaufbauten aus hoch- und niedrigbrechenden Metalloxid-, Metalloxidhydrat-, Metall- oder Metallfluoridschichten vorliegen, wobei sich vorzugsweise hoch- und niedrigbrechende Schichten abwechseln. Insbesondere bevorzugt sind Schichtpakete aus einer hoch- und einer niedrigbrechenden Schicht, wobei auf dem Träger eines oder mehrere dieser Schichtpakete aufgebracht sein können. Die Reihenfolge der hochund niedrigbrechenden Schichten kann dabei an den Träger angepasst werden, um den Träger in den Mehrschichtaufbau mit einzubeziehen. In einer weiteren Ausführungsform können die Metalloxid-, Metalloxidhydrat-, Metallsuboxid-, Metall-, Metallfluorid-, Metallnitrid-, Metalloxynitridschichten mit Farbmitteln oder anderen Elementen versetzt oder dotiert sein. Als Farbmittel oder andere Elemente eignen sich beispielsweise organische oder anorganische Farbpigmente wie farbige Metalloxide, z.B. Magnetit, Chromoxid oder Farbpigmente wie z.B. Berliner Blau, Ultramarin, Bismutvanadat, Thenards Blau, oder aber organische Farbpigmente wie z.B. Indigo, Azopigmente, Phthalocyanine oder auch Karminrot oder Elemente wie z.B. Yttrium oder Antimon. Effektpigmente enthaltend diese Schichten zeigen eine hohe Farbenvielfalt in bezug auf ihre Körperfarbe und können in vielen Fällen eine winkelabhängige Änderung der Farbe (Farbflop) durch Interferenz zeigen.

Die äußere Schicht auf dem Träger ist in einer bevorzugten Ausführungsform ein hochbrechendes Metalloxid. Diese äußere Schicht kann zusätzlich auf den oben genannten Schichtpaketen oder bei hochbrechenden Trägern Teil eines Schichtpaketes sein und z.B. aus TiO₂, Titansuboxiden, Fe₂O₃, SnO₂, ZnO, ZrO₂, Ce₂O₃ CoO, CO₃O₄, V₂O₅, Cr₂O₃ und/oder Mischungen davon, wie zum Beispiel Ilmenit oder Pseudobrookit, bestehen. TiO₂ ist besonders bevorzugt.

Beispiele und Ausführungsformen der oben genannten Materialien und Pigmentaufbauten finden sich z.B. auch in den Research Disclosures RD 471001 und RD 472005, deren Offenbarungen hiermit unter Bezugnahme mit eingeschlossen sind.

Die Dicke der Metalloxid-, Metalloxidhydrat-, Metallsuboxid-, Metall-, Metallfluorid-, Metallnitrid-, Metalloxynitridschichten oder einer Mischung daraus beträgt üblicherweise 3 bis 300 nm und im Falle der Metalloxid-, Metalloxidhydrat-, Metallsuboxid-, Metallfluorid-, Metallnitrid-, Metalloxynitridschichten oder einer Mischung daraus vorzugsweise 20 bis 200 nm. Die Dicke der Metallschichten beträgt vorzugsweise 4 bis 50 nm.

Die Größe der Träger und damit der Effektpigmente ist an sich nicht kritisch. Plättchenförmige Träger und/oder mit einer oder mehreren transparenten oder semitransparenten Metalloxid-, Metall- oder Metallfluoridschichten beschichtete plättchenförmige Träger weisen in der Regel eine Dicke zwischen 0.05 und 5 µm, insbesondere zwischen 0.1 und 4.5 µm auf. Die Ausdehnung in der Länge bzw. Breite beträgt üblicherweise zwischen 1 und 250 µm, vorzugsweise zwischen 2 und 200 µm und insbesondere zwischen 2 und 100 µm.

Der Anteil der plättchenförmigen Effektpigmente in der erfindungsgemäßen Pigmentpräparation liegt im Allgemeinen zwischen 60 und 85 Gew.-%, vorzugsweise zwischen 65 und 75 Gew.-%, bezogen auf die Pigmentpräparation. Die optimalen Anteile sind für den Fachmann leicht zu ermitteln und hängen im wesentlichen von der Teilchengröße der eingesetzten Effektpigmente, dem Formfaktor der Effektpigmente und der Art des Pigmentaufbaus ab. Erstrebenswert ist ein möglichst hoher Anteil an Effektpigmenten bzw. ein möglichst geringer Anteil an Trägermaterial um möglichst wenig Fremdmaterial in den zu pigmentierenden Kunststoff einzubringen. Es muss jedoch genügend Trägermaterial verwendet werden, um die gewünschten Eigenschaften der erfindungsgemäßen Pigmentpräparation, wie z.B. Verhindern der Stippenbildung, Nicht-Stauben und verbesserte Rieselfähigkeit zu gewährleisten. Dazu müssen die Teilchen nicht nur mit dem Trägermaterial umhüllt sein, sondern sie müssen auch miteinander zu einem gut rieselfähigen groben "Pulver" verklebt sein. Selbstverständlich können die erfindungsgemäßen Pigmentpräparationen nicht nur als Pulver, sondern auch in anderer Form, z.B. als Granulate, vorliegen.

Das Trägermaterial kann polar aber auch unpolar sein und kann Polyolefine, Polyolefinderivate, Styrolpolymerisate, Vinylchloridpolymerisate, Acrylatpolymerisate, Polyacetale, Polyamide, Polyurethane, Copolymere und/oder Wachse umfassen. Der Schmelzbereich des Trägermaterials sollte zwischen 70 und 200°C, vorzugsweise zwischen 80 und 160°C und ganz besonders bevorzugt zwischen 90 und 140°C liegen. In der erfindungsgemäßen Pigmentpräparation liegen die plättchenförmigen Effektpigmente, das Trägermaterial und das Fluor-haltige Polymer miteinander gemischt vor. Vorzugsweise wird das plättchenförmige Effektpigment durch das Trägermaterial zumindest partiell oder vollständig beschichtet oder umhüllt. Eine vollständige Umhüllung und "Verklebung" des plättchenförmigen Effektpigmentes mit dem Trägermaterial ist ganz besonders bevorzugt.

Dabei liegt vorzugsweise das Fluor-haltige Polymer im Trägermaterial vollständig dispergiert vor.

Beispiele für die genannten Materialien sind Polyethylen-Homopolymerisate unterschiedlicher Dichte, vernetzte oder chlorierte Polyethylene, Polypropylene, Polybutene, Polyisobutylene oder Poly-4-methylpentene. Weitere Beispiele zu den oben genannten Polymeren finden sich in Saechtling, Kunststoff Taschenbuch, 27. Ausgabe, Carl Hanser Verlag.

Weiterhin eignen sich als Trägermaterial Copolymere und/oder Wachse. Als Copolymere werden Polymere verstanden, die aus mehr als einer Art von Monomeren entstanden sind. Für die erfindungsgemäße Pigmentpräparation eignen sich Bi-, Tri- oder Quaterpolymere sowie alternierende, statistische, Gradienten-, Block- oder Pfropfcopolymere.

Beispiele für Copolymere sind z.B. Co- und Terpolymere aus z.B. Ethylen oder Propylen mit Vinylacetat, Acrylat- oder Acrylsäure-Comonomeren, Polyvinylalkohol-Copolymere, Polyvinylether-Copolymere, Polyvinylpyrrolidon-Copolymere, Polyethylenoxid-Copolymere, Acrylnitril-Copolymere, Methylmethacrylat-Copolymere, Polyacetal-Copolymere, aber auch Polyamid-Copolymere und/oder Polyurethan-Copolymere. Beispiele für einsetzbare Copolymere sind Ethylen-Propylen-Copolymere, Ethylenvinylacetat-Copolymere, Ethylen-Acrylsäure-Copolymere oder Ethylen-Vinylalkohol-Copolymere.

Als Wachse für das Trägermaterial in der vorliegenden Erfindung eignen sich alle dem Fachmann bekannten Wachse, wobei es sich um natürliche oder synthetische Wachse handeln kann. Als natürliche Wachse eignen sich die fossilen und nicht-fossilen Wachse. Beispiele für fossile Wachse sind Petroleumwachse oder Montanwachse, die auch chemisch modifiziert sein können. Beispiele für nicht-fossile Wachse sind die tierischen und pflanzlichen Wachse. Synthetische Wachse sind z.B. Amidwachse oder Polyolefinwachse (z.B. PE-Wachse), die auch chemisch modifiziert sein können. Vorzugsweise werden als Wachse PE-Wachse, Montanwachse und deren Derivate sowie Amidwachse eingesetzt.

Die oben genannten Materialien können allein oder in Form einer Mischung als Trägermaterial verwendet werden, wobei bezüglich der Mischung keine Einschränkungen im Hinblick auf das Mischungsverhältnis und die Auswahl der dabei eingesetzten Materialien bestehen. In einer bevorzugten Ausführungsform der vorliegenden Erfindung ist das Trägermaterial Polyethylen oder PE-Wachs.

Wesentlicher Bestandteil der erfindungsgemäßen Pigmentpräparation sind die ein oder mehreren Fluor-haltigen Polymere. Gemäß der vorliegenden Erfindung geeignete Fluor-haltige Polymere umfassen z.B. Polytetrafluorethylene, Polyfluorethylenpropylene, Perfluoralkoxypolymere, Polyvinylidenfluoride, Polyvinylfluoride, Polychlortrifluorethylene, Tetrafluorethylen-Hexafluorpropylen-Vinylidenfluorid-Copolymere, Copolymere aus Fluor-haltigen Monomeren und unfluorierten Monomeren oder Mischungen hieraus, wie z.B. Ethylen-Tetrafluorethylen-Copolymere, Tetrafluorethylen-Propylen-Copolymere, oder Ethylen-Chlortrifluorethylen-Copolymere. Die Fluor-haltigen Polymere können auch als Mischungen vorliegen bzw. andere zusätzliche Additive enthalten. Weitere Beispiele bzw. nähere Spezifikationen der einsetzbaren Fluor-haltigen Polymere finden sich z.B. in WO 98/30619 oder WO 02/066544 und dort genannten Referenzen, die hiermit durch Bezugnahme in dieser Anmeldung enthalten sind. Geeignete Fluor-haltige Polymere bzw. Polymergemische sind kommerziell erhältlich, z.B. unter den Handelsnamen Zonyl® (Fa. E. I. du Pont de Nemours and Company), Dynamar® und Dyneon® (Fa. 3M) oder Viton® Free Flow (Fa. DuPont Dow Elastomers).

Der Anteil der Fluor-haltigen Polymere kann 0.5 bis 10 Gew.-%, bezogen auf die Pigmentpräparation, betragen, vorzugsweise liegt er im Bereich von 2 bis 7.5 Gew.-%. Die Obergrenze des Anteils wird dabei mehr durch den Preis als durch die Funktion bestimmt. Höhere Anteile sind prinzipiell möglich, verbessern aber aus technischer Sicht nicht das Ergebnis in Bezug auf die Vermeidung von Stippen im Endprodukt.

In einer weiteren Ausführungsform kann die Pigmentpräparation weitere Additive und/oder Hilfsstoffe enthalten, wie sie für den Einsatz in Kunststoffen üblich sind. Derartige Additive und/oder Hilfsstoffe können Gleitmittel, Trennmittel, Stabilisatoren, Antistatika, Flammschutzmittel, Farbmittel, Flexibilisatoren und Weichmacher, Haftvermittler, Treibmittel, Antioxidantien, UV-Absorber, organische polymerverträgliche Lösungsmittel und/oder Tenside sein, wie z.B. Diisoocytphthalat, Phenolderivate, Mineralöle. Einen Überblick über die einsetzbaren Additive und Hilfsstoffe findet sich in Saechtling, Kunststoff Taschenbuch, 27. Ausgabe, Carl Hanser Verlag oder gibt R. Wolf in "Plastics, Additives" in Ullmann's, Encyclopedia of Industrial Chemistry, Internetedition, 7th Edition, 2003.

Die erfindungsgemäße Pigmentpräparation lässt sich unkompliziert herstellen. Gegenstand der vorliegenden Erfindung ist damit auch ein Verfahren zur Herstellung der erfindungsgemäßen Pigmentpräparation, wobei ein oder mehrere plättchenförmige Effektpigmente, ein oder mehrere Fluor-haltige Polymere und ein Trägermaterial gemischt werden. Die Zugabe der einzelnen Komponenten kann dabei gleichzeitig oder nacheinander erfolgen. Die einsetzbaren plättchenförmigen Effektpigmente, das Trägermaterial bzw. die Fluor-haltigen Polymere sind bereits vorab bei der Beschreibung der Pigmentpräparation genannt.

So kann gemäß dem erfindungsgemäßen Verfahren z.B. das Effektpigment vorgelegt werden und gleichzeitig oder nacheinander mit dem Trägermaterial und Fluor-haltigen Polymer oder Suspensionen des Trägermaterials und Fluor-haltigen Polymeren gemischt werden. Falls das Trägermaterial und/oder Fluor-haltige Polymer in Form einer Suspension zugesetzt wird, kann auch das Effektpigment in dieser Suspension dispergiert werden und das Lösungsmittel abgedunstet werden. Die Auswahl des Lösungsmittels erfolgt für den Fachmann in naheliegender Weise unter Einbeziehung der Löslichkeit des eingesetzten Trägermaterials. Das Ausfällen des Trägermaterials aus einer wässrigen Dispersion mittels pH-Wert-Änderung ist ebenfalls möglich. Weiterhin kann die Herstellung der Pigmentpräparation durch Aufschmelzen des Trägermaterials erfolgen. Das Aufschmelzen des Trägermaterials ist in der vorliegenden Erfindung besonders bevorzugt, weil damit der Einsatz von Lösungsmitteln vermieden werden kann.

In einer besonders bevorzugten Ausführungsform wird zunächst das Fluor-haltige Polymer in dem Trägermaterial gemischt, z.B. in einem Taumelmischer, und anschließend, z.B. auf einem Doppelschneckenextruder, aufgeschmolzen, dispergiert und extrudiert. Nach dem Mahlen dieser Mischung zu Pulver kann diese mit dem plättchenförmigen Effektpigment in einem Mischer bis zu gleichmäßigen Verteilung und Verbindung vermischt werden, vorzugsweise durch Aufschmelzen unter Wärmeeinwirkung. Auf diese Weise wird eine besonders gute Verteilung von Fluor-haltigem Polymer und Pigment im Trägermaterial erreicht, die sich vorteilhaft auf die späteren Extrusionseigenschaften auswirkt.

Die Herstellung der erfindungsgemäßen Pigmentpräparation durch Aufschmelzen erfolgt bei Temperaturen von 70 bis 240°C. Vorzugsweise erfolgt das Verfahren bei Temperaturen oberhalb des Schmelzpunktes des Trägermaterials. Auf diese Weise wird eine besonders gute Durchmischung von Pigment, Trägermaterial und Fluor-haltigem Polymer erzielt.

In einer weiteren Ausführungsform des erfindungsgemäßen Verfahrens können der Mischung aus plättchenförmigem Effektpigment, Fluor-haltigem Polymer und Trägermaterial weitere, bei der Verarbeitung von Kunststoffen übliche Additive und/oder Hilfsstoffe zugesetzt werden. Beispiele für derartige Additive und/oder Hilfsstoffe sind vorab bei der Beschreibung der Pigmentpräparation genannt worden. Der Zeitpunkt der Zugabe der Additive und/oder Hilfsstoffe kann dabei in fachmännischer Weise optimiert werden.

Nach Entfernung des Lösungsmittels bzw. nach Erkalten der beim Aufschmelzen aufgebrachten Mischung aus Trägermaterial und Fluor-haltigem Polymer liegt die Pigmentpräparation als frei fließendes, grobteiliges Pulver vor, das gut weiter verarbeitet werden kann.

Die Verwendung der erfindungsgemäßen Pigmentpräparation zur direkten Pigmentierung von Kunststoffen und zur Herstellung von Masterbatches ist ebenfalls Gegenstand der vorliegenden Erfindung.

Die direkte Einarbeitung der erfindungsgemäßen Pigmentpräparation in den Kunststoff erfolgt, indem man das Kunststoffgranulat und/oder -pulver mit der Pigmentpräparation mischt. Anschließend wird der mit der erfindungsgemäßen Pigmentpräparation pigmentierte Kunststoff unter Wärmeeinwirkung verformt oder extrudiert. Weiterhin können dem Kunststoffgranulat und/oder -pulver bei der Einarbeitung der Pigmentpräparation gegebenenfalls weitere Additive und Pigmente zugesetzt werden. Beispiele für derartige Additive sind vorab bei der Beschreibung der Pigmentpräparation genannt worden. Als Pigmente eignen sich alle dem Fachmann bekannten anorganischen oder organischen Pigmente.

Die Herstellung der Kunststoffgranulat und/oder -pulver/Pigment- Mischung erfolgt in der Regel so, dass in einem geeigneten Mischer, z.B. Taumeloder Schnellmischer, das Kunststoffgranulat und/oder -pulver vorgelegt, mit eventuellen Zusätzen benetzt wird und danach die Pigmentpräparation zugesetzt und untergemischt wird.

Für den Einsatz der erfindungsgemäßen Pigmentpräparation eignen sich eine ganze Reihe von Kunststoffen, insbesondere thermoplastische Kunststoffe. Dabei kann es sich bei den Kunststoffen um polare Kunststoffe als auch um unpolare (z.B. olefinische) Kunststoffe handeln. Beispiele für geeignete Kunststoffe finden sich z.B. in Saechtling, Kunststoff Taschenbuch, 27. Ausgabe, Carl Hanser Verlag.

Auch für die Herstellung von Masterbatches lässt sich die erfindungsgemäße Pigmentpräparation vorteilhaft einsetzen. Auf diese Weise lassen sich auch die höchsten Anforderungen an die Pigmentdispergierung erfüllen. Die Herstellung der Masterbatches kann dabei sowohl kontinuierlich als auch diskontinuierlich erfolgen, vorzugsweise kontinuierlich, z.B. durch Einsatz von Doppelschneckenextrudern. Vorteilhaft bei der Herstellung von Masterbatches ist die Verwendung von Pulvern oder Grieß der jeweiligen Kunststoffe. So lassen sich z.B. unter Einsatz der erfindungsgemäßen Pigmentpräparation selbst auf einem Einschneckenextruder Masterbatches mit einem Pigmentanteil von bis zu 40 Gew.-%, bezogen auf den Masterbatch, herstellen.

Bevorzugt wird die erfindungsgemäße Pigmentpräparation zur Herstellung von Masterbatches eingesetzt.

Die nachfolgenden Beispiele sollen die Erfindung näher erläutern, ohne sie jedoch zu begrenzen.

### Beispiele:

### Beispiel 1: Herstellung der Pigmentpräparation

10 Gew.-% eines Fluor-haltigen Polymers (z.B. Dyneon® FX-5911X der Fa. 3M) werden mit 90 Gew.-% eines handelsüblichen PE-Wachspulvers (z.B. Luwax® AH 3 der Fa. BASF AG) in einem Taumelmischer gemischt und anschließend auf einem Doppelschneckenextruder aufgeschmolzen und extrudiert. Das Fluor-haltige Polymer liegt danach im PE-Wachs dispergiert vor. Nach dem Mahlen dieses Materials zu Pulver werden 30 Gew.-% davon mit 70 Gew.-% Iriodin® Brilliant Pearl vorgemischt und bei einer Temperatur von 150°C in einem Mischer bis zur gleichmäßigen Verteilung und Verbindung von Pigment und Fluor-Polymerhaltigem Wachs gemischt.

### Beispiel 2: Herstellung eines Masterbatches

42.8 Gew.-% der Pigmentpräparation aus Beispiel 1 werden mit 0.3 Gew.-% Pigmentrot 143 und 56.9 Gew.-% Polyethylen (PE-LLD) zu einem Masterbatch verarbeitet.

### Beispiel 3: Weiterverarbeitung durch Extrusion des Masterbatches

5 Gew.-% Masterbatch aus Beispiel 2 werden mit 95 Gew.-% eines Polyethylens hoher Dichte (PE-HD) zu einem Kompound verarbeitet und auf einer Blasanlage zu PE-Flaschen verarbeitet. Man erhält stippenfreie Flaschen.

### Vergleichsbeispiel:

Ein Masterbatch aus 69.7 Gew.-% eines Polyethylen (PE-LLD), 30 Gew.-% Iriodin® Brilliant Pearl und 0.3 Gew.-% Pigmentrot 143 enthält wird in einem PE-HD in einer Menge von 5 Gew.-% zugesetzt und auf einer Blasanlage zu PE-Flaschen verarbeitet. Etliche Flaschen enthalten mit bloßem Auge sichtbare, überwiegend Perlglanzpigment enthaltende Stippen. Bei einigen Stippen bricht sogar die Flaschenwand bei leichter mechanischer Belastung. Dabei war das Masterbatch als solches stippenfrei.

## Patentansprüche

1. Pigmentpräparation zur Pigmentierung von Kunststoffen umfassend ein oder mehrere plättchenförmige Effektpigmente, ein Trägermaterial und ein oder mehrere Fluor-haltige Polymere.

2. Pigmentpräparation nach Anspruch 1, **dadurch gekennzeichnet, dass** das plättchenförmige Effektpigment ein Perlglanzpigment, Metalleffektpigment, Mehrschichtpigment mit transparenten, semitransparenten und/oder opaken Schichten, holographisches Pigment, BiOCI- und/oder LCP-Pigment ist.

3. Pigmentpräparation nach Anspruch 1 oder 2, **dadurch gekennzeichnet, dass** der Anteil der plättchenförmigen Effektpigmente, bezogen auf die Pigmentpräparation, 60 bis 85 Gew.-% beträgt.

4. Pigmentpräparation nach einem der Ansprüche 1 bis 3, **dadurch gekennzeichnet, dass** das Trägermaterial Polyolefine, Polyolefinderivate, Styrolpolymerisate, Vinylchloridpolymerisate, Acrylatpolymerisate, Polyacetale, Polyamide, Polyurethane, Copolymere und/oder Wachse umfasst.

5. Pigmentpräparation nach einem der Ansprüche 1 bis 4, **dadurch gekennzeichnet, dass** das Fluor-haltige Polymer Polytetrafluorethylene, Polyfluorethylenpropylene, Perfluoralkoxypolymere, Polyvinylidenfluoride, Polyvinylfluoride, Polychlortrifluorethyle, Tetrafluorethylen-Hexafluorpropylen-Vinylidenfluorid-Copolymere, Copolymere aus Fluor-haltigen Monomeren und unfluorierten Monomeren oder Mischungen hieraus umfasst.

6. Pigmentpräparation nach einem der Ansprüche 1 bis 5, **dadurch gekennzeichnet, dass** der Anteil des Fluor-haltigen Polymers 0.5 bis 10 Gew.-%, bezogen auf die Pigmentpräparation, beträgt.

7. Pigmentpräparation nach einem der Ansprüche 1 bis 6, **dadurch gekennzeichnet, dass** die Pigmentpräparation zusätzlich Additive und/oder Hilfsstoffe enthält.

8. Verfahren zur Herstellung einer Pigmentpräparation nach Anspruch 1, **dadurch gekennzeichnet, dass** ein oder mehrere plättchenförmige Effektpigmente, ein oder mehrere Fluor-haltige Polymere und ein Trägermaterial gemischt werden.

9. Verfahren nach Anspruch 8, **dadurch gekennzeichnet, dass** das Mischen der ein oder mehreren plättchenförmigen Effektpigmente, ein oder mehreren Fluor-haltigen Polymere und des Trägermaterials in Form von Suspensionen oder durch Aufschmelzen erfolgt.

10. Verfahren nach Anspruch 8 oder 9, **dadurch gekennzeichnet, dass** das Mischen der ein oder mehreren plättchenförmigen Effektpigmente, ein oder mehreren Fluor-haltigen Polymere und des Trägermaterials bei Temperaturen im Bereich von 70 bis 240°C erfolgt.

11. Verfahren nach einem der Ansprüche 8 bis 10, **dadurch gekennzeichnet, dass** der Mischung zusätzlich Additive und/oder Hilfsstoffe zugegeben werden.

12. Verwendung der Pigmentpräparation nach Anspruch 1 zur Pigmentierung von Kunststoffen und zur Herstellung von Masterbatches.
